**Europäisches Patentamt**

**European Patent Office**

**Office européen des brevets**

(19)

(11) Veröffentlichungsnummer : **0 332 975 B1**

(12) **EUROPÄISCHE PATENTSCHRIFT**

(45) Veröffentlichungstag der Patentschrift :
**12.08.92 Patentblatt 92/33**

(51) Int. Cl.⁵ : **G05B 19/18**

(21) Anmeldenummer : **89103921.6**

(22) Anmeldetag : **06.03.89**

(54) **Verfahren für das Gewindeerzeugen auf numerisch gesteuerten Automaten.**

(30) Priorität : **18.03.88 DE 3809205**

(43) Veröffentlichungstag der Anmeldung :
**20.09.89 Patentblatt 89/38**

(45) Bekanntmachung des Hinweises auf die
Patenterteilung :
**12.08.92 Patentblatt 92/33**

(84) Benannte Vertragsstaaten :
**CH DE FR IT LI NL**

(56) Entgegenhaltungen :
**DE-A- 3 304 644**
**DE-A- 3 621 676**

(73) Patentinhaber : **SIEMENS**
**AKTIENGESELLSCHAFT**
**Wittelsbacherplatz 2**
**W-8000 München 2 (DE)**

(72) Erfinder : **Baer, Thomas, Dipl.-Ing.**
**Görlitzer Strasse 5**
**W-8520 Erlangen (DE)**
Erfinder : **Papiernik, Wolfgang, Dr.**
**Eskilstunastrasse 9**
**W-8520 Erlangen (DE)**

## Beschreibung

Die Erfindung bezieht sich auf ein Verfahren für das Gewindeerzeugen auf numerisch gesteuerten Automaten, wobei zur Drehzahlregelung einer mit der Gewindeachse zusammenfallenden Drehachse sowie zur Regelung einer Linearbewegung in Gewindelängsrichtung einem ersten Drehzahlregelkreis der Drehachse ein Drehzahlsollwert vorgebbar ist und wobei die Linearbewegung unter Berücksichtigung der Gewindesteigung über einen zweiten Regelkreis relativ zur Bewegung der Drehachse steuerbar ist.

Numerisch gesteuerte Automaten können beispielsweise Roboter, Werkzeugmaschinen, oder spezielle Gewindebohr- bzw. Gewindeschneidmaschinen sein. Beim Gewindeerzeugen mit diesen numerisch gesteuerten Automaten kommt es auf die exakte Einhaltung der Relativbewegung eines die Linearbewegung ausführenden Schlittens zur Drehachse an, die sich bei bekannter, konstanter Drehzahl der Drehachse(Spindel) und vorgegebener Gewindesteigung exakt bestimmen läßt.

Aus der DE-A- 33 04 644 ist eine Steuereinrichtung für das Gewindebearbeiten auf numerisch gesteuerten Werkzeugmaschinen bekannt, bei welcher der Sollwert für die Linearbewegung des Schlittens aus dem Istwert der Drehbewegung der Spindel gebildet wird. Dabei kann sich zwischen dem Drehwinkel der Spindel und der Position des Schlittens ein Schleppabstand einstellen, der im stationären Betrieb einen konstanten Wert annimmt und deswegen kompensierbar ist.

Bei dynamischen Drehzahländerungen der Spindel, die beispielsweise beim Anlaufen, beim Verzögern oder bei Lastschwankungen und/oder Temperaturgang etc. auftreten, ist diese statische Kompensation nicht wirksam.

Die dynamischen Schwankungen der Spindeldrehzahl machen sich insbesondere beim Gewindebohren negativ bemerkbar. Soll beispielsweise ein Gewinde in ein Sackloch eingebracht werden, so muß die Spindel bis zum Stillstand gebremst werden, wenn sich der Gewindebohrer in vorbestimmter Tiefe befindet. Wenn der Regelkreis für die Linearbewegung des Schlittens seine Sollwerte erst aus den Istwerten der Spindel erhält, kann der Schlitten der Drehzahlverzögerung der Spindel nicht unmittelbar folgen. Es stellt sich ein dynamischer Schleppabstand zwischen dem Gewindebohrer und der Position des Schlittens ein. Ohne zusätzliche Maßnahmen würde dies beispielsweise bei kleineren Bohrern zum Bruch führen, bei größeren Bohrern zu einer Beschädigung des Gewindegangs und/oder zum Verschleiß mechanischer Teile der Werkzeugmaschine. Das aufgezeigte Problem stellt sich entsprechend beim Herausdrehen eines Gewindebohrers aus einem Sackloch.

Zum Gewindebohren werden deshalb sogenannte Ausgleichsbohrfutter benutzt, die den Gewindebohrern ein axiales Spiel gewähren. Dadurch kann der dynamische Schleppabstand zwischen Gewindevortrieb und Vorschubposition in Rahmen des durch das Ausgleichsbohrfutter möglichen axialen Spiels ausgeglichen werden. Solche Ausgleichsbohrfutter benötigen aber einen großen Platzbedarf, der sich umso nachteiliger bemerkbar macht, wenn an Bearbeitungsmaschinen eine große Anzahl von verschiedenen Gewindebohrern und den dazugehörigen Ausgleichsbohrfuttern benötigt wird.

Beim Gewindeschneiden kann der dynamische Schleppabstand zu unzulässigen Toleranzen in der Gewindesteigung führen.

Aufgabe der vorliegenden Erfindung ist es ein Verfahren zu schaffen, wodurch der dynamische Schleppabstand zwischen Gewindevortrieb und Vorschubposition beim Gewindeerzeugen mit numerisch gesteuerten Automaten minimiert wird.

Gemäß der Erfindung wird diese Aufgabe mittels eines Verfahrens der eingangs genannten Art dadurch gelöst, daß gleichzeitig mit der Aufschaltung des Drehzahlsollwertes auf den Drehzahlregelkreis der Drehachse ein aus dem Drehzahlsollwert abgeleiteter Vorschubsollwert zusammen mit einer aus dem Lageistwert der Drehachse und dem Lageistwert der Linearbewegung gebildeten Regeldifferenz auf den zweiten Regelkreis für die Linearbewegung aufschaltbar ist.

Bei gleichen dynamischen Verhalten des Geschwindigkeitsregelkreises für die Linearbewegung (Schlitten) und des Regelkreises für die Drehzahlregelung der Drehachse (Spindel), ergibt sich eine vorteilhafte Ausbildung der Erfindung dadurch, daß der Vorschubsollwert für die Linearbewegung mittels eines Proportionalgliedes aus dem Drehzahlsollwert der Drehachse abgeleitet wird. Durch dieses Proportionalglied kann die Gewindesteigung berücksichtigt werden.

Bei unterschiedlicher Dynamik zwischen Drehzahlregelkreis der Drehachse und dem Regelkreis für die Linearbewegung ist der Vorschubsollwert für die Linearbewegung mittels eines $T_t$-, PT1-oder PT2-Gliedes oder mittels eines Regelgliedes höherer Ordnung aus dem Drehzahlsollwert der Drehachse abzuleiten. Durch entsprechende Einstellung der Parameter dieser Regelglieder kann sowohl die Gewindesteigung berücksichtigt werden, als auch eine Anpassung der unterschiedlichen Dynamiken vorgenommen werden.

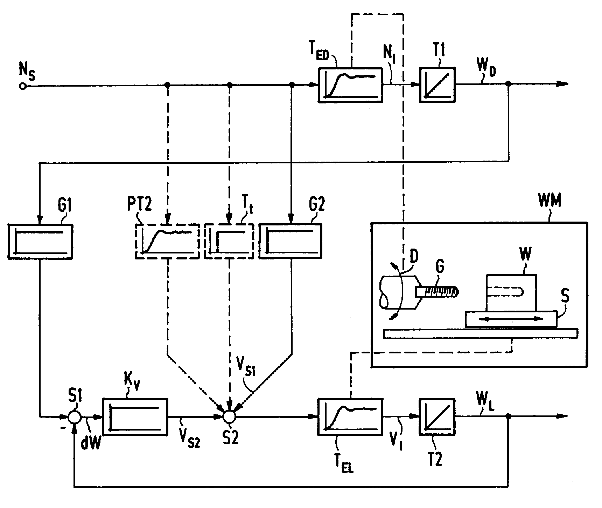

Ein Ausführungsbeispiel der Erfindung ist in der Zeichnung dargestellt und wird im folgenden näher erläutert. Die Figur zeigt:

Einen Regelkreis zur Drehzahlregelung einer Drehachse und einer davon abhängigen Linearbewegung eines Schlittens.

Die Darstellung zeigt einen Signalflußplan eines Regelkreises zur Drehzahlregelung einer Drehachse D (Spindel) und einer davon abhängigen Linearbewegung eines Schlittens S. Die Richtung des jeweiligen Signalflusses ist durch Pfeile angedeutet. Zur Kennzeichnung der wirkungsmäßigen Abhängigkeit eines jeweiligen Ausgangssignals vom Eingangssignal ist in jeden Block des Signalflußplans die jeweilige Übergangsfunktion eingezeichnet.

Eine symbolische Darstellung einer Werkzeugmaschine WM zeigt den Schlitten S, auf dem ein mit einem Sackloch versehenes Werkstück W befestigt ist, sowie die Drehachse D mit einem Gewindebohrer G. Die Drehrichtung der Drehachse D und die Bewegungsrichtung des Schlittens S ist jeweils durch Pfeile angedeutet. Die gestrichelten Linien weisen auf die Regelung der Drehachse D durch einen Regelkreis $T_{ED}$ und auf die Regelung der Vorschubgeschwindigkeit des Schlittens S durch einen Regelkreis $T_{EL}$ hin.

Ein dem Drehzahlregelkreis $T_{ED}$ nachgeschaltetes Integrierglied T1 ist mit dem Eingang eines Proportionalreglers G1 verbunden. Der Ausgang des Proportionalglieds G1 führt auf einen Summationspunkt S1, dem ein weiterer Proportionalregler $K_V$, sowie der Regelkreis $T_{EL}$ für die Linearbewegung (Vorschubbewegung) des Schlittens und ein zweites Integrierglied T2 folgt. Der Eingang eines Proportionalreglers G2 ist mit dem Eingang des Drehzahlreglers $T_{ED}$ verbunden. Das Ausgangssignal $V_{S1}$ des Proportionalreglers G2 bildet zusammen mit den Ausgangssignal $V_{S2}$ des Proportionalgliedes $K_V$ das Eingangssignal für den Regelkreis $T_{EL}$ des Schlittens. An der Summationsstelle S1 wird aus dem Ausgangssignal $W_L$ des Integrierers T2 und aus dem Ausgangssignal des Proportionalgliedes G1, die Regelgröße dW gebildet.

Anstelle des Proportionalreglers G2 kann auch ein $T_t$-, ein PT1-, ein PT2-, oder ein Regelglied höherer Ordnung verwendet werden. Diese alternativen Möglichkeiten sind in der Figur durch gestrichelte Linien und Blöcke angedeutet.

Für die folgenden Ausführungen sei angenommen, daß ein Gewinde mittels des Gewindebohrers G in ein bereits vorhandenes Sackloch eines Werkstückes eingebracht werden soll. Der Gewindebohrer G sei über ein Bohrfutter an der Spindel einer Werkzeugmaschine WM befestigt, daß Werkstück W am Schlitten S der Werkzeugmaschine WM, der eine Vorschubbewegung in beide Richtungen der Drehachse D des Gewindebohrers G ausführen kann.

Die Drehzahl $N_I$ der Spindel wird durch Vorgabe eines Drehzahlsollwertes $N_S$ über den Drehzahlregelkreis $T_{ED}$ geregelt. Gleichzeitig wird die Drehzahl $N_S$ über den Proportionalregler G2 an die Summationsstelle S2 als Vorschubsollgeschwindigkeit $V_{S1}$ des Schlittens gegeben. Durch den Proportionalreglers G2 wird die Geschwindigkeit der Vorschubbewegung, die von der Drehzahl des Gewindebohrers G und von der Steigung des Gewindes anhängig ist an die Gewindesteigung angepaßt. Da bei gleicher Dynamik zwischen Drehzahlregelkreis $T_{ED}$ der Spindel und dem Regelkreis $T_{EL}$ für die Vorschhubbewegung des Schlittens S die Abweichung von Drehzahlsollwert $N_S$ zu Drehzahlistwert $N_I$ und die Abweichung von Vorschubsollwert $V_{S1}$ zu Vorschubistwert $V_I$ gleich ist, wird sich eine, der Drehbewegung der Spindel und der Gewindesteigung entsprechende Vorschubbewegung des Schlittens S einstellen, die auch dann noch synchron zum Vortrieb des Gewindebohrers G verläuft, wenn die Drehbewegung durch Vorgabe eines entsprechenden Drehzahlsollwertes $N_S$ beschleunigt oder verzögert wird. Entsprechendes gilt selbstverständlich auch für eine Umkehr der Bewegungsrichtungen, also auch beim Herausdrehen des Gewindebohrers G.

Bei ungleichen dynamischen Verhalten zwischen dem Drehzahlregelkreis $T_{ED}$ der Spindel und dem Regelkreis des Schlittens S, kann das Proportionalglied G2 ersetzt werden durch ein $T_t$-Regelglied, durch ein PT1- (nicht dargestellt) bzw. PT2-Glied oder durch ein Regelglied höherer Ordnung (nicht dargestellt). Durch diese Regelglieder können dann Unterschiede in der Dynamik der Regelkreise ausgeglichen werden.

Bei dynamischen Störungen des Drehzahlregelkreises $T_{ED}$, beispielsweise durch mechanische Belastungen oder Temperaturgang etc., kann sich die Istdrehzahl $N_I$ der Spindel bei gleicher Solldrehzahl $N_S$ verändern. Eine asynchrone Bewegung des Schlittens S zur tatsächlichen Drehbewegung der Spindel wird dann dadurch vermieden, daß der Drehwinkel $W_D$ der Spindel, der dem Ausgangssignal des Integriergliedes T1 entspricht, über das Proportionalglied G1, über die Summationsstelle S1 und den Proportionalregler $K_V$ als Korrekturgröße $V_{S2}$ dem Regelkreis für die Vorschubbewegung des Schlittens S aufgeschaltet wird. Dabei wird - entsprechend dem Proportionalregler G2 - durch das Proportionalglied G1 die Steigung des Gewindebohrers berücksichtigt.

Dynamische Störungen des Regelkreises $T_{EL}$ werden durch Rückkopplung der inkrementalen Wegabschnitte $W_L$ des Schlittens S, die aus der Vorschubistgeschwindigkeit $V_I$, durch das Integrierglied T2 gebildet werden, zur Summationsstelle S1 ausgeglichen.

An der Summationsstelle S1 wird dann aus den Istwert der Drehbewegung, also dem Drehwinkel $W_D$, und aus dem Istwert der Vorschubbewegung des Schlittens S, also den inkrementalen Wegabschnitten $W_L$, eine Regelgröße dW gebildet, aus der über den Proportionalregler $K_V$ ein (Korrektur-)Sollwert $V_{S2}$ für die Vorschubbewegung des Schlittens S erzeugt wird.

Der Vorschubsollwert für den Regelkreis $T_{EL}$ des Schlittens S ergibt sich damit aus den Vorschubsollwerten $V_{S1}$ und $V_{S2}$ an der Summationsstelle S2.

## Patentansprüche

1. Verfahren für das Gewindeerzeugen auf numerisch gesteuerten Automaten, (WM) wobei zur Drehzahlregelung einer mit der Gewindeachse zusammenfallenden Drehachse (D) sowie zur Regelung einer Linearbewegung in Gewindelängsrichtung einem ersten Drehzahlregelkreis ($T_{ED}$) der Drehachse ein Drehzahlsollwert ($N_S$) vorgebbar ist und wobei die Linearbewegung unter Berücksichtigung der Gewindesteigung über einen zweiten Regelkreis ($T_{EL}$) relativ zur Bewegung der Drehachse steuerbar ist, **dadurch gekennzeichnet,** daß gleichzeitig mit der Aufschaltung des Drehzahlsollwertes ($N_S$) auf den Drehzahlregelkreis ($T_{ED}$) der Drehachse ein aus dem Drehzahlsollwert ($N_S$) abgeleiteter Vorschubsollwert ($V_{S1}$) zusammen mit einer aus dem Lageistwert ($W_D$) der Drehachse und dem Lageistwert ($W_L$) der Linearbewegung gebildeten Regeldifferenz ($V_{S2}$) auf den zweiten Regelkreis ($T_{EL}$) für die Linearbewegung aufschaltbar ist.

2. Verfahren nach Anspruch 1, **dadurch gekennzeichnet,** daß der Vorschubsollwert ($V_{S1}$) für die Linearbewegung mittels eines Proportionalreglers (G2) aus dem Drehzahlsollwert ($N_S$) der Drehachse abgeleitet wird.

3. Verfahren nach Anspruch 1, **dadurch gekennzeichnet,** daß der Vorschubsollwert ($V_{S1}$) für die Linearbewegung mittels eines Totzeit-Gliedes ($T_t$) aus dem Drehzahlsollwert ($N_S$) der Drehachse (D) abgeleitet wird.

4. Verfahren nach Anspruch 1, **dadurch gekennzeichnet,** daß der Vorschubsollwert ($V_{S1}$) für die Linearbewegung mittels eines PT1-Gliedes (PT1) aus dem Drehzahlsollwert ($N_S$) der Drehachse (D) abgeleitet wird.

5. Verfahren nach Anspruch 1, **dadurch gekennzeichnet,** daß der Vorschubsollwert ($V_{S1}$) für die Linearbewegung mittels eines PT2-Gliedes (PT2) oder einem Regelglied höherer Ordnung, aus dem Drehzahlsollwert ($N_S$) der Drehachse (D) abgeleitet wird.

## Revendications

1. Procédé pour tailler un filetage sur des automates à commande numérique (WM), selon lequel, pour régler la vitesse de rotation d'un axe de rotation (D) qui coïncide avec l'axe du filetage, ainsi que pour régler un déplacement linéaire dans la direction longitudinale du filetage, une valeur de consigne ($N_S$) de la vitesse de rotation peut être prédéterminée pour un premier circuit ($T_{ED}$) de régulation de la vitesse de rotation de l'axe de rotation, et selon lequel le déplacement linéaire peut être commandé en tenant compte du pas du filetage, par l'intermédiaire d'un second circuit de régulation ($T_{EL}$), par rapport au déplacement de l'axe de rotation, **caractérisé par le fait qu'**au moment où la valeur de consigne ($N_S$) de la vitesse de rotation est appliquée au circuit ($T_{ED}$) de régulation de la vitesse de rotation de l'axe de rotation, une valeur de consigne d'avance ($V_{S1}$) dérivée de la valeur de consigne ($N_S$) de la vitesse de rotation ainsi qu'une différence de régulation ($V_{S2}$) formée à partir de la valeur réelle de position ($W_D$) de l'axe de rotation et de la valeur réelle de position ($W_L$) du déplacement linéaire, sont appliquées au second circuit de régulation ($T_{EL}$) pour le déplacement linéaire.

2. Procédé suivant la revendication 1, **caractérisé par le fait que** la valeur de consigne d'avance ($V_{S1}$) pour le déplacement linéaire est dérivée de la valeur de consigne ($N_S$) de la vitesse de rotation de l'axe de rotation, par l'intermédiaire d'un régulateur a action proportionnelle (G2).

3. Procédé suivant la revendication 1, **caractérisé par le fait que** la valeur de consigne de la vitesse ($V_{S1}$) pour le déplacement linéaire est dérivée de la valeur de consigne ($N_S$) de la vitesse de rotation de l'axe de rotation (D), au moyen d'un circuit de temporisation ($T_t$).

4. Procédé suivant la revendication 1, **caractérisé par le fait que** la valeur de consigne d'avance ($V_{S1}$) du déplacement linéaire est dérivée de la valeur de consigne ($N_S$) de la vitesse de rotation de l'axe de rotation (D), au moyen d'un circuit PT1 (PT1).

5. Procédé suivant la revendication 1, **caractérisé par le fait que** la valeur de consigne d'avance ($V_{S1}$) pour le déplacement linéaire est tirée de la valeur de consigne ($N_N$) de la vitesse de rotation de l'axe de rotation (D), au moyen d'un circuit PT2 (PT2) ou d'un circuit de régulation d'ordre supérieur.

## Claims

1. A method for producing screw threads on numerically controlled automatic machinery (WM), wherein for regulation of the speed of rotation of a rotary axis (D) coinciding with the screw thread axis (D) as well as for regulating a linear motion in the longitudinal direction of the screw thread a desired speed of rotation value ($N_S$) is given to a first speed of rotation control circuit ($T_{ED}$) of the rotary axis and wherein the linear motion, when considering the screw thread pitch, is able to be controlled by way of a second control circuit ($T_{EL}$), relative to the motion of the rotary axis, **characterised in that** at the same time as the application of the desired speed of rotation value ($N_S$) to the speed of rotation control circuit ($T_{ED}$) of the rotary axis a desired feed value ($V_{S1}$), derived from the desired speed of rotation value ($N_S$), is able to be applied together with a control difference ($V_{S2}$) formed from the actual position value ($W_D$) of the rotary axis and the actual position value ($W_L$) of the linear motion, to the second control circuit (TEL) for linear motion.

2. A method according to claim 1, **characterised in that** the desired feed value ($V_{S1}$) for the linear motion is derived by means of a proportional regulator (G2) from the desired speed of rotation value ($N_S$) of the rotary axis.

3. A method according to claim 1, **characterised in that** the desired feed value ($V_{S1}$) for the linear motion is derived by means of a lag element ($T_t$) from the desired speed of rotation value ($N_S$) of the rotary axis (D).

4. A method according to claim 1, **characterised in that** the desired feed value ($V_{S1}$) for the linear motion is derived by means of a PT1 element (PT1) from the desired speed of rotation value ($N_S$) of the rotary axis (D).

5. A method according to claim 1, **characterised in that** the desired feed value ($V_{S1}$) for the linear motion is derived by means of a PT2 element (PT2) or a control element of a higher order, from the desired speed of rotation value ($N_S$) of the rotary axis (D).